# EUROPEAN PATENT APPLICATION

(11) **EP 4 472 009 A1**
(43) Date of publication of application: **04.12.2024**
(21) Application number: 23176984.5
(22) Date of filing: 02.06.2023
(51) Int. Cl.: H02J 3/38, H02J 3/12, H02J 3/24, H02J 3/28

(54) **METHOD FOR CONTROLLING AT LEAST ONE ASSET IN A POWER GRID**

(71) Applicant: Innio Jenbacher GmbH & Co OG, 6200 Jenbach (AT)
(72) Inventor: HUBER, Johannes, 6233 Kramsach (AT); LETTENBICHLER, Othmar, 6321 Angath (AT); DENK, Mathias, 91757 Treuchtlingen (DE)
(74) Representative: Torggler & Hofmann Patentanwälte - Innsbruck

(57) **Abstract**

Method for controlling at least one asset (1, 2, 3, 4) in a power grid (11), in particular a microgrid, with at least one electrical energy generation asset (1, 2, 3), comprising the steps of:
- defining the block load reserve of an asset (1, 2, 3, 4) as a power value such that, under the condition that the power is solely provided by said asset (1, 2, 3, 4), if the total load of the grid (11) is changed by the amount of said power value, the voltage and/or frequency of the grid (11) essentially remain within predefined boundaries
- defining a minimum block load reserve of the grid (11) as a reference value
- estimating the block load reserve of each asset (1, 2, 3, 4) available in the power grid (11)
- calculating the sum of the total available block load reserve of all available assets (1, 2, 3, 4) combined in the grid (11)
- calculating a block load gap as a difference of the reference value for the minimum block load reserve of the grid (11) and the sum of the available block load reserve
- if the block load gap is non-zero in magnitude, controlling at least one asset (1, 2, 3, 4) by starting and/or adjusting and/or keeping up operation of at least one asset in the grid (11).

## Description

The present invention relates to a method for controlling at least one asset in a power grid with at least one electrical energy generation asset. The present invention further relates to a computer program product for performing such a method. Furthermore, the present invention relates to control means for controlling assets in a power grid and a power grid with such control means.

Power grids with electrical energy generation assets are generally able to provide electrical energy to electrical energy consuming assets that are connected or are to be connected to the grid. Power grids, in particular in the form of a microgrid, can operate independently or in conjunction with other power grids. Depending on the voltage and power output of the electrical energy generation asset or assets in a power grid, the load demand of electrical energy consuming assets in the power grid can outbalance the amount of electrical power that is generated or available under the restraint that the voltage and/or frequency of the power grid essentially remain within predefined boundaries. A change in the load demand can result in unwanted or excessive voltage and/or frequency fluctuation in the power grid.

Various methods of controlling assets in a power grid to avoid unwanted or excessive voltage and/or frequency fluctuation in the power grid have been suggested in the state of the art.

These methods include, although slow and inflexible, scheduling the connection of loads to the power grid depending on electrical energy generation forecast information, which may for example include forecasts for solar radiation or wind strength for corresponding renewable resources such as solar photovoltaic and wind turbines. Such a method may be unreliable at times and is unsuited for handling load changes out of schedule.

Other methods rely on a simultaneous operation of several redundant electrical energy generation assets in a power grid, wherein a subset of the electrical energy generation assets is intentionally operated well below their maximum load factor. Upon a detection of a voltage and/or frequency fluctuation in the power grid, the output of one or more electrical energy generation assets of said subset is increased in reaction to a load change having caused said voltage and/or frequency fluctuation. Such a method requires inefficient operation of a subset of the electrical energy generation assets.

The object of the invention is to specify a method, a computer program product, control means and a power grid with such control means which do not have the disadvantages discussed above and/or make efficient operation of a power grid and flexible adaption to load changes possible.

The object is achieved by a method for controlling at least one asset in a power grid, a computer program product for performing such a method, control means power grid, and a power grid with such control means as described below.

Embodiments of the invention are defined in the dependent claims.

A power grid may comprise at least one electrical energy generation asset. A power grid may also comprise at least one electrical energy consuming asset, which constitutes a load on the grid. An energy generation and/or consumption of an asset may generally be controllable by control means. Such an asset may be referred to as a controllable asset.

During a startup behavior, for instance when initially starting an electrical energy generation asset such as for example a power generation asset comprising an engine, in particular a gas engine, an electrical energy generation asset may temporarily constitute an electrical energy consuming asset until its net electrical energy generation becomes positive.

A power grid may generally be able to provide electrical energy to electrical energy consuming assets that are connected or are to be connected to the grid. Power grids, in particular in the form of a microgrid, can operate independently, which is often referred to as island operation. Power grids and in particular microgrids can operate in conjunction with other power grids.

The load demand of electrical energy consuming assets in the power grid can outbalance the amount of electrical power that is generated or available under the restraint that the voltage and/or frequency of the power grid essentially remain within predefined boundaries. A change in the load or load demand, both in real-time operation and anticipation, can or could result in voltage and/or frequency fluctuation in the power grid.

A block load reserve of a power grid may be defined as a power value such that if the total load of the grid is changed, in particular increased, by the amount of said power value, the voltage and/or frequency of the grid essentially remain within predefined boundaries for deviations of the nominal voltage and/or frequency of the power grid.

Similarly, the block load reserve of an asset, in particular an electrical energy generation asset, may be defined as a power value such that, under the condition or assumption that the power is solely provided by said asset, if the total load of the grid is changed, in particular increased, by the amount of said power value, the voltage and/or frequency of the grid essentially remain within predefined boundaries.

A sum of the total available block load reserve of all available assets combined in a power grid may be defined as the block load reserve of the power grid.

A minimum block load reserve of a power grid may be defined as a minimum power value such that if the total load of the grid is changed, in particular increased, by the amount of said power value, the voltage and/or frequency of the grid essentially remain within predefined boundaries for deviations of the nominal voltage and/or frequency of the power grid.

A voltage and/or frequency performance of the grid may be defined in accordance with ISO8528-5 for the design and performance of reciprocating internal combustion engine driven alternating current generating sets.

In other words, if a load in the form of an energy electrical energy consuming asset with an electrical energy consuming rating below such a minimum block load reserve is connected to the power grid, the voltage and/or frequency of the grid will essentially remain within predefined boundaries. Conversely, if a load in the form of an energy electrical energy consuming asset with an electrical energy consuming rating exceeding such a minimum block load reserve is connected to the power grid, the voltage and/or frequency of the grid will essentially exceed predefined boundaries.

According to the invention, the method for controlling at least one asset in a power grid, in particular a microgrid, with at least one electrical energy generation asset, comprises at least the following steps:
In a first step, the block load reserve of an asset as a power value is defined such that, under the condition that the power is solely provided by said asset, if the total load of the grid is changed, in particular increased, by the amount of said power value, the voltage and/or frequency of the grid essentially remain within predefined boundaries. A voltage and/or frequency performance of the grid may be defined in accordance with ISO8528-5 for the design and performance of reciprocating internal combustion engine driven alternating current generating sets.

In a second step, a minimum block load reserve of the power grid is defined as a reference value. A minimum block load reserve of a power grid may be defined as a minimum power value, for example in a human-machine-interface and/or via a communication interface of control means for controlling assets in a power grid.

In a third step, the block load reserve of each asset available in the power grid is estimated. Each asset available in the power grid may be assigned a power value corresponding to the block load reserve of that asset.

In a fourth step, the sum of the total available block load reserve of all available assets combined in the grid is calculated. The calculated total available block load reserve of all available assets combined in the grid may be assigned a corresponding power value.

In a fifth step, the block load gap as a difference of the reference value for the minimum block load reserve of the grid and the sum of the available block load reserve is calculated. The calculated block load gap may be assigned a corresponding power value.

In a sixth step, if the block load gap is non-zero in magnitude, at least one asset is controlled by starting and/or adjusting and/or keeping up operation of at least one asset in the grid. Controlling an asset may involve starting the electrical energy generation of an asset, adjusting parameters of the electrical energy generation or consumption of an asset, stopping the electrical energy generation of an asset or keeping up the electrical energy generation or consumption of an asset.

If the block load gap is non-zero in magnitude, there may be a difference between the reference value for the minimum block load reserve of the grid and the sum of the available block load reserve.

The method according to the invention allows for efficient operation of a power grid and flexible adaption to load changes by evaluating a difference of the reference value for the minimum block load reserve of the grid and the sum of the available block load reserve.

In a power grid with at least one asset and at least one control means for controlling the at least one asset, the at least one control means can react to changes in the load of the grid for instance by changing the power output of the at least one asset in order to minimize the block load gap and to control the frequency and/or the voltage of the grid within predefined boundaries.

During the transient after the load change, temporary deviations of frequency and/or voltage may occur due to the dynamic behavior and limitations of practically possible change rates of the power output of each asset. The control means may be designed to minimize these deviations.

Especially for the isolated operation of a microgrid, the actual block load reserve defines how much additional load can be connected to the grid while the frequency and/or voltage stay within the desired bounds. Having an estimate and a setpoint of the block load reserve improves the stability and reliability of the operation of the grid. At the same time, excess block load reserve, which would be economically inefficient can be avoided.

If the minimum block load reserve is greater than the available block load reserve, at least one asset may be controlled by starting and/or adjusting and/or keeping up operation of at least one asset in the grid in order to increase the available block load reserve. This may ensure that the voltage and/or frequency of the grid essentially remain within predefined boundaries upon increasing total load of the grid.

If the available block load reserve is greater than the minimum block load reserve, at least one asset may be controlled by starting and/or adjusting and/or keeping up operation of at least one asset in the grid in order to decrease the available block load reserve. This may ensure that the power grid is efficient in operation.

After the step of controlling at least one asset, some of the previous steps may be repeated for reevaluation of the grid. A repetition may occur a limited number of times or in a loop. In particular, a new evaluation might occur periodically, for example at each execution of the sixth step of controlling an asset.

In one embodiment, in a repeated execution of the method, the sum of the total available block load reserve of all available assets combined in the grid may be calculated. A block load gap as a difference of the reference value for the minimum block load reserve of the grid and the sum of the available block load reserve may be calculated. If the block load gap is non-zero in magnitude, at least one asset by starting and/or adjusting and/or keeping up operation of at least one asset in the grid may be controlled.

In a further embodiment, in a repeated execution of the method, a minimum block load reserve of the grid, in particular a new minimum block load reserve, may be defined as a reference value as a reference value. The block load reserve of each asset available in the power grid may again be estimated. The sum of the total available block load reserve of all available assets combined in the grid may be calculated. A block load gap as a difference of the reference value for the minimum block load reserve of the grid and the sum of the available block load reserve may be calculated. If the block load gap is non-zero in magnitude, at least one asset by starting and/or adjusting and/or keeping up operation of at least one asset in the grid may be controlled.

Generally, at least one asset may be controlled to at least partially compensate the difference of the sum of the available block load reserve and the reference value for the minimum block load reserve. In other words, at least one asset may be controlled to minimize the block load gap.

The minimum block load reserve of the grid may be defined with respect to a predefined change of the total load of the grid under the condition that the voltage and/or frequency of the grid essentially remain within predefined boundaries for said predefined change of the total load of the grid.

A load that is to be connected to the power grid can be assigned an estimated power value. Said power value may quantify a predefined change of the total load of the grid. The minimum block load reserve may be defined to have a greater power value than the predefined change of the total load of the grid.

If for example a predefined load change would exceed the minimum block load reserve, at least one asset may be controlled by starting and/or adjusting and/or keeping up operation of at least one asset in the grid before said load is connected to the grid.

A predefined change of the total load of the grid may preferably be defined in a human-machine-interface.

The minimum block load reserve of the grid may for example be defined via a communication interface. Such a communication interface may enable external requests for block loads and/or assets, in particular energy consuming assets, that are intended to be switched on or connected to the power grid. Such loads or assets may be associated with predefined or communicated values for their respective block loads and continuous load requirements. The communication interface may be part of control means for controlling assets in a power grid.

The minimum block load reserve of the grid may be defined based on an estimated worst-case scenario, such as failure or outage of an asset, in particular an energy generating asset, and/or loss of output power of an energy generating asset. Such a loss of output power may be due to fuel shortage or environmental factors such as reduction of wind speed or cloud coverage. Estimations of a power loss may be predicted based on indicative measurements or forecasts.

In a preferred embodiment, the method may further comprise a step, for instance a seventh step, of characterizing available assets with respect to the capability of at least compensating the difference of the sum of the available block load reserve and the reference value for the minimum block load reserve. Assets available in the grid may be assigned a power value corresponding to their estimated block load reserve. The assets available in the grid may be ranked according to said assigned power value and with respect to their capability of at least compensating a block load gap.

Other factors, such as fuel efficiency, availability or operating costs, may influence the characterization of an asset with respect to the capability of at least compensating a block load gap as well.

At least one asset may be controlled based on the characterization of the available assets in order to at least partially compensate the difference of the total available block load reserve and the reference value. The assets available in the grid may be controlled according to their assigned power value and with respect to their capability of at least compensating a block load gap. An asset or assets which is or are capable of at least compensating a block load gap better than others may be favored in the step of controlling at least one by starting and/or adjusting and/or keeping up operation of at least one asset in the grid.

In a preferred embodiment, the method may further comprise a step of selecting a voltage performance level and/or frequency performance level of the grid including boundaries for an allowable deviation from a voltage and/or frequency of the grid from a desired voltage and/or frequency. A certain voltage performance level and/or frequency performance level of the grid may correspond to a certain minimum block load reserve and vice versa. Tighter boundaries for an allowable deviation from a voltage and/or frequency of the grid from a desired voltage and/or frequency may require a higher minimum block load reserve.

A predefined voltage performance level and/or frequency performance level of the grid including boundaries for an allowable deviation from a voltage and/or frequency of the grid from a desired voltage and/or frequency upon a load change may be assigned a performance class specifying said boundaries.

A selection of a voltage performance level and/or frequency performance level of the grid may preferably be carried out via a human-machine-interface.

Preferably, selecting a voltage performance level and/or frequency performance level of the grid may include predefining one or more of the following boundaries:
- boundaries for an allowable temporal deviation from a desired voltage and/or frequency of the grid, which may relate to an allowable timespan for which the deviation may last
- boundaries for an allowable relative deviation from a desired voltage and/or frequency of the grid, which may relate to an allowable percentage change from a desired voltage and/or frequency
- boundaries for an allowable absolute deviation from a desired voltage and/or frequency of the grid, which may relate to an allowable numerical change from a desired voltage and/or frequency

In a preferred embodiment, the method is further comprising the step of estimating a load of the grid by at least one electrical energy consuming asset. By estimating the load of each electrical energy consuming asset in the grid, a total load of the grid can be calculated.

A block load reserve of the grid may for instance be estimated by comparing the sum power output of the electrical energy generation asset or assets in the power grid to the total load of the grid.

In a preferred embodiment, in particular in the step of controlling at least one asset, the energy consumption of at least one electrical energy consuming asset may be controlled to at least partially compensate the difference of the sum of the available block load reserve and the reference value for the minimum block load reserve. Preferably, at least one electrical energy consuming asset may be controlled to reduce the energy consumption of said asset in order to minimize the block load gap.

The block load reserve of each asset available in the grid is estimated based on one or more of the following aspects:
A block load reserve of an asset may be estimated based on a startup behavior and/or a steady state behavior of an asset. In particular, a power value associated with initially connecting an asset to the grid or with starting an electrical energy generation asset may be assigned to an asset. In a steady state, a block load reserve may be estimated based on a current power output in relation to a peak power output of an asset.

A block load reserve of an asset may be estimated based on previously assessed load change behavior, for instance from associated block load diagrams. Block load diagrams may specify the maximum load step for various base loads with consideration to allowed frequency and/or voltage deviations.

A block load reserve of an asset may be estimated based on a predefined block load reserve value, preferably from calibration values for the block load reserve of an asset, stored in a database, wherein preferably the values may be selected via a human-machine-interface.

A block load reserve of an asset may be estimated based on at least one adjustable parameter relating to the block load reserve, which is stored in a database, wherein preferably the at least one parameter relating to the block load reserve is adjustable via a human-machine-interface. Such an adjustable parameter may relate to an adjustable electrical energy output or electrical energy consumption of an asset.

The block load reserve of each asset available in the grid in the form of an electrical energy generation asset comprising an engine, in particular a gas engine, is estimated based on an operating point of said engine and/or a load capacity utilization of said engine. The block load reserve of such an asset may depend on at least one adjustable parameter relating to the operation of the engine, such as for example load, speed, ignition timing, fuel ratio, compression ratio and the like.

The block load reserve of each asset available in the grid in the form of an electrical energy storage asset and/or in the form of an energy converter asset may be estimated based on at least one parameter relating to the actual state of charge and/or the actual power output of an asset available. An asset in the form of an electrical energy storage asset and/or in the form of an energy converter asset may provide electrical energy to assets in the grid or may provide a load to the grid. The electrical energy output and the electrical energy consumption may be adjustable.

The total available block load reserve of all available assets combined in the grid may be calculated based on the estimation of the block load reserve of each asset available in the grid.

Protection is also sought for a computer program product, comprising commands from a memory unit which is in or can be brought into data connection with the processing unit that, when executed by a processing unit, cause the latter to perform a method as described previously.

The computer program product can be stored, for example, in at least one memory unit of control means and can be executed by the at least one processing unit of the control means.

Protection is also sought for control means for controlling assets in a power grid, which is adapted for carrying out a method for controlling assets in a grid with at least one electrical energy generation asset as described previously.

A power grid may comprise at least one control means. If a power grid comprises two of more control means, for instance for controlling two or more assets, the control means can preferably be in data connection with each other.

The control means may comprise at least one memory unit and at least one processing unit. The control means may further comprise a human-machine-interface for a user to perform selections and adjustments of parameters of the grid.

The control means may comprise various operating modes in which the control means may be configured to carry out steps of a method for controlling assets in a power grid.

In a first operating mode, definition of a block load reserve of the grid can be carried out.

In a second operating mode, definition of the block load reserve of an asset can be carried out.

In a third operating mode, definition of a minimum block load reserve within the grid as a reference value can be carried out.

In a fourth operating mode, an estimation of the block load reserve of each asset available in the power grid can be carried out.

In a fifth operating mode, a calculation of the sum of the total available block load reserve of all available assets combined in the grid can be carried out.

In a sixth operating mode, a calculation of the difference of the sum of the available block load reserve and the reference value for the minimum block load reserve can be carried out.

In a seventh operating mode, control of at least one asset by starting and/or adjusting and/or keeping up operation of at least one asset in the grid can be carried out.

Further operating modes may be provided for a repeated execution of the method as described previously.

Further operating modes may be provided for the various embodiments and implementations of the method as described previously.

The control means may be in or can be brought into data connection with controllable assets in a grid.

Protection is also sought for a power grid with at least one asset, in particular at least one electrical energy generation asset, wherein the power grid has at least one control means as previously described. In particular, such a power grid may be implemented as a microgrid.

Embodiments of the invention are shown in the figures, wherein:
- Fig. 1: shows a schematic representation of a first embodiment of a method for controlling at least one asset in a grid,
- Fig. 2: shows a schematic representation of a second embodiment of a method for controlling at least one asset in a grid,
- Fig. 3: shows a schematic representation of a third embodiment of a method for controlling at least one asset in a grid,
- Fig. 4: shows a schematic representation of a fourth embodiment of a method for controlling at least one asset in a grid,
- Fig. 5: shows a schematic representation of an embodiment of power grid with control means for controlling assets in a power grid, and
- Fig. 6: shows an exemplary block load diagram.

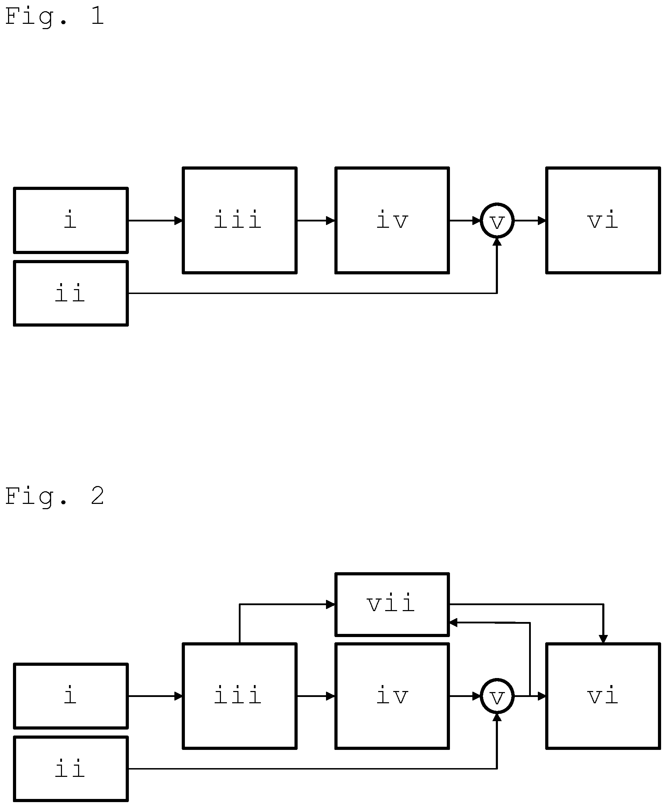

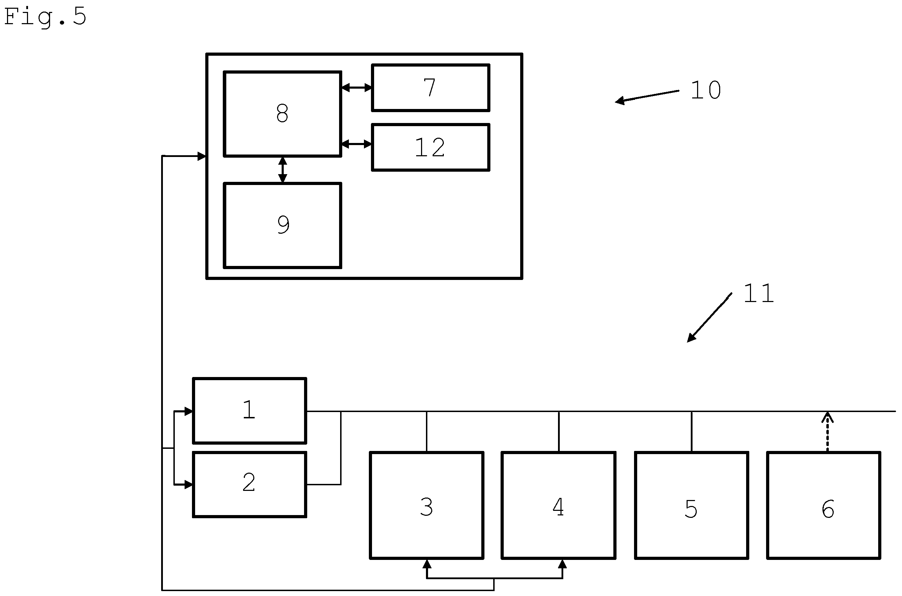

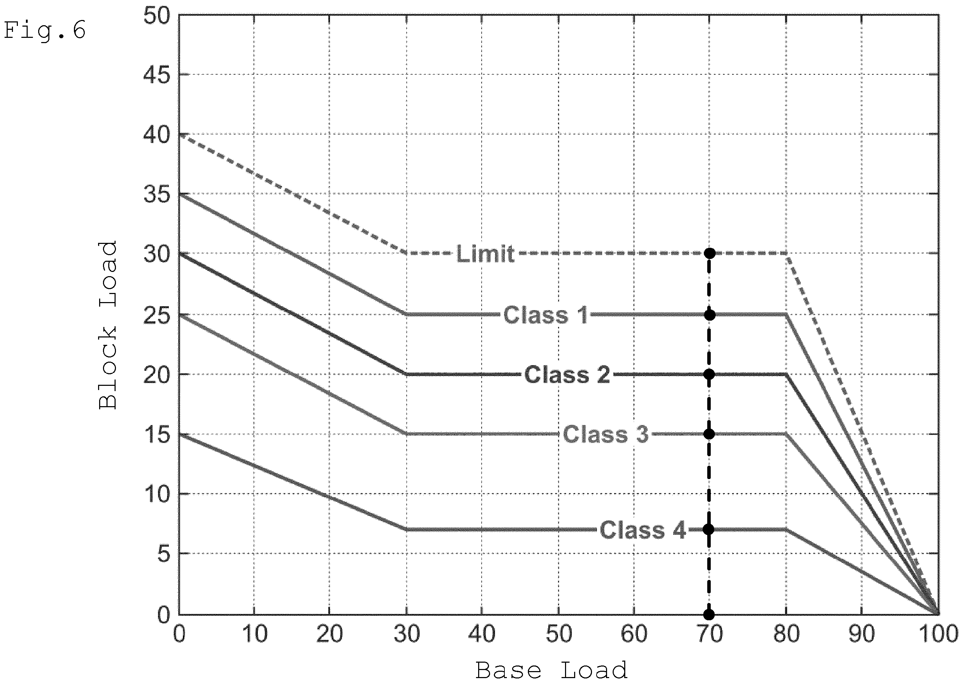

Figures 1 to 4 show schematic representation of various embodiments of a method for controlling at least one asset 1, 2, 3, 4 in a grid 11. Figure 5 shows a schematic representation an embodiment of a power grid 11 and control means 10 for controlling assets 1, 2, 3, 4 in the power grid 11, along with additional assets 5, 6. Figure 6 shows an exemplary block load diagram.

Figure 1 shows a schematic representation of a first embodiment of a method for controlling at least one asset 1, 2, 3, 4 in a grid 11, wherein the method for controlling at least one asset 1, 2, 3, 4 in a power grid 11, comprises at least the following steps:
In a first step i, the block load reserve of an asset 1, 2, 3, 4 as a power value is defined such that, under the condition that the power is solely provided by said asset 1, 2, 3, 4, if the total load of the grid 11 is changed, in particular increased, by the amount of said power value, the voltage and/or frequency of the grid 11 essentially remain within predefined boundaries.

In a second step ii, a minimum block load reserve of the power grid 11 is defined as a reference value. A minimum block load reserve of a power grid 11 may be defined as a minimum power value, for example in a human-machine-interface 9 of control means 10 for controlling assets 1, 2, 3, 4 in a power grid 11.

In a third step iii, the block load reserve of each asset 1, 2, 3, 4 available in the power grid 11 is estimated. Each asset 1, 2, 3, 4 available in the power grid 11 may be assigned a power value corresponding to the block load reserve of that asset 1, 2, 3, 4.

In a fourth step iv, the sum of the total available block load reserve of all available assets 1, 2, 3, 4 combined in the grid 11 is calculated. The calculated total available block load reserve of all available assets 1, 2, 3, 4 combined in the grid 11 may be assigned a corresponding power value.

In a fifth step v, the block load gap as a difference of the reference value for the minimum block load reserve of the grid 11 and the sum of the available block load reserve is calculated. The calculated block load gap may be assigned a corresponding power value.

In a sixth step vi, if the block load gap is non-zero in magnitude, at least one asset 1, 2, 3, 4 is controlled by starting and/or adjusting and/or keeping up operation of at least one asset 1, 2, 3, 4 in the grid 11.

Figure 2 shows a schematic representation of a second embodiment of a method for controlling at least one asset 1, 2, 3, 4 in a grid 11, which further comprise a seventh step vii of characterizing available assets 1, 2, 3, 4 with respect to the capability of at least compensating the difference of the sum of the available block load reserve and the reference value for the minimum block load reserve. Assets 1, 2, 3, 4 available in the grid 11 may be assigned a power value corresponding to their estimated block load reserve. The assets 1, 2, 3, 4 available in the grid 11 may be ranked according to said assigned power value and with respect to their capability of at least compensating a block load gap.

In the sixth step vi, at least one asset 1, 2, 3, 4 may be controlled based on the characterization of the available assets 1, 2, 3, 4 in order to at least partially compensate the difference of the total available block load reserve and the reference value.

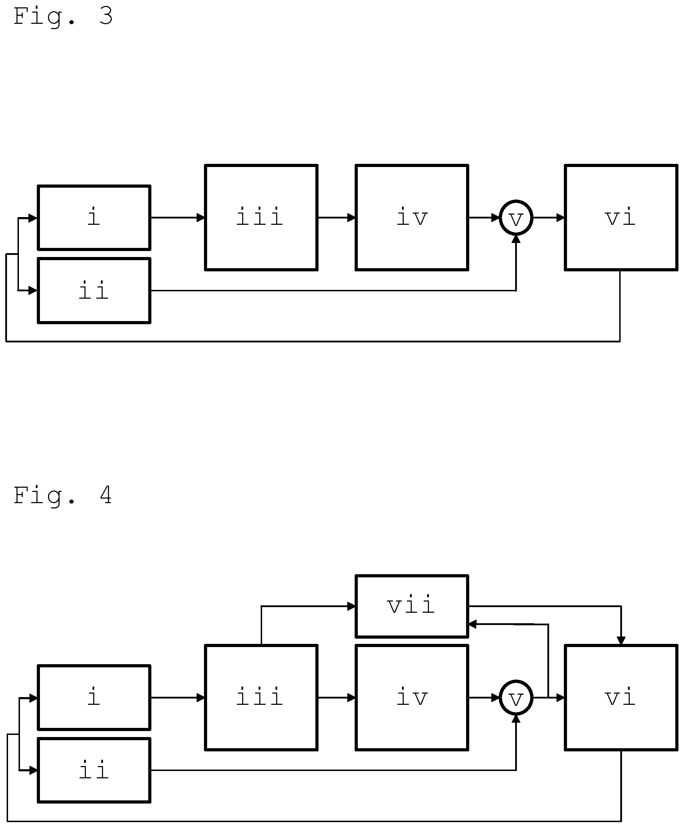

Figures 3 and 4 show a schematic representation of a third and fourth embodiment of a method for controlling at least one asset 1, 2, 3, 4 in a grid 11. The embodiments closely relate to the first and second embodiment of the method as represented in figures 1 and 2, wherein after the sixth step vi of controlling at least one asset 1, 2, 3, 4, some of the steps i to vi or vii may be repeated for reevaluating and controlling of the grid 11. A repetition may occur a limited number of times or in a loop.

A repeated execution of the method may involve execution of steps i to vi or vii, or a subset thereof.

Figure 5 shows a schematic representation an embodiment of a power grid 11 with control means for controlling assets 1, 2, 3, 4 in the power grid 11.

In the embodiment shown, the power grid 11 comprises control means 10, electrical energy generation asset 1, 2, 3, 4 and electrical energy consuming asset 5, 6, wherein the load of the electrical energy generation asset 6 is not yet connected to the grid 11.

The control means may comprise at least one memory unit 7, for instance for storing a database or commands, and at least one processing unit 8, for instance for interpreting user input or executing commands. The control means 10 may further comprise a human-machine-interface 9 for a user to perform user inputs such as selections and adjustments of parameters of the grid 11 and assets 1, 2, 3, 4.

The control means 10 may comprise various operating modes in which the control means 10 may be configured to carry out each of the steps i to vii of a method for controlling assets 1, 2, 3, 4 in a power grid 11 as previously described.

Commands for a computer program product may be stored in the memory unit 7, which is in or can be brought into data connection with the processing unit 8 that, when executed by the processing unit 8, may cause the latter to perform a method according to one of the embodiments previously described.

The control means 10 may be in or can be brought into data connection with controllable assets 1, 2, 3, 4 in the grid 11.

In the exemplary embodiment shown, the grid 11 comprises controllable assets 1, 2, 3, 4 in the form of an electrical energy generation asset 1 comprising an engine, an asset in the form of an electrical energy storage asset 2 and an asset in the form of an energy converter asset 3.

A block load reserve the electrical energy generation asset 1 comprising an engine may be estimated based on an operating point of said engine and/or a load capacity utilization of said engine. A block load reserve of asset 2, 3 may be estimated based on at least one parameter relating to the actual state of charge and/or the actual power output of the assets 2, 3.

Additionally, the grid 11 comprises a controllable electrical energy consuming asset 4, the power consumption of which is controllable. The grid 11 also comprises electrical energy consuming asset 5, 6.

If a load such as electrical energy consuming asset 6 is to be connected to the power grid 11, asset 6 can be assigned an estimated power value relating to its power consumption. Said power value may quantify a predefined change of the total load of the grid 11. The minimum block load reserve of the grid 11 may be defined to have a greater power value than the predefined change of the total load of the grid, ensuring that the voltage and/or frequency of the grid 11 essentially remain within predefined boundaries upon connection of electrical energy consuming asset 6 to the grid 11.

If it is determined that the block load gap as previously described is non-zero in magnitude, at least one of the assets 1, 2, 3, 4 may be controlled by starting and/or adjusting and/or keeping up operation of the same in the grid 11. Controlling at least one of the asset 1, 2,3, 4 may involve starting the electrical energy generation of an asset 1, 2, 3 and/or adjusting parameters of the electrical energy generation or consumption of an asset 1, 2, 3, 4 and/or stopping the electrical energy generation of an asset 1, 2, 3 and/or keeping up the electrical energy generation or consumption of an asset 1, 2,3, 4, in particular to minimize the block load gap.

Figure 6 shows an exemplary block load diagram, where the base load of an exemplary grid 11 as the abscissa is plotted against a block load or intended load change of the grid 11 as the ordinate. The base load of the grid 11 may be expressed as a percentage of the nominally allowed load for a given power output of all energy generating assets 1, 2, 3 in the grid 11.

As described earlier, if a load in the form of an energy electrical energy consuming asset 5, 6 is connected to the grid 11, the total load of the grid 11 may generally increase. This increase in load or block load may also be expressed as a percentage of the nominally allowed load.

A predefined voltage performance level and/or frequency performance level of the grid 11 including boundaries for an allowable deviation from a voltage and/or frequency of the grid 11 from a desired voltage and/or frequency upon a load change may be assigned a performance class specifying said boundaries. In Figure 6, different exemplary classes are labelled Class 1, Class 2, Class 3 and Class 4. The boundaries for the allowable deviations for each class may be arbitrarily chosen. Allowable deviations from a voltage and/or frequency of the grid 11 may also have a limit beyond which stable operation of the grid 11 may not be guaranteed. Different classes of voltage performance levels and/or frequency performance levels of the grid 11 may correspond to a certain minimum block load reserve and vice versa.

The stability limit for a load change or block load that may be connected to the grid 11 at an exemplary base load of 70% of the nominal load of the exemplary grid 11 may be 30% of the nominal load. In other words, for this exemplary grid 11, at a base load of 70% of the nominal load, another 30% of the nominal load may be connected to the grid 11 while stable operation of the grid may maintained, although considerable allowable deviations from a voltage and/or frequency of the grid 11 may occur temporarily.

Class 1 may correspond to stricter demands upon voltage performance levels and/or frequency performance levels. Under the condition that an allowable deviation from a voltage and/or frequency of the grid 11 stays within the boundaries according to Class 1, the limit for a load change or block load that may be connected to the grid 11 at the exemplary base load of 70% of the nominal load of the exemplary grid 11 may be 25% of the nominal load.

Classes 2, 3, and 4 may correspond to still stricter demands upon voltage performance levels and/or frequency performance levels. Under the condition that an allowable deviation from a voltage and/or frequency of the grid 11 stays within the boundaries according to Class 2, 3, or 4, the limit for a load change or block load that may be connected to the grid 11 at the exemplary base load of 70% of the nominal load of the exemplary grid 11 may therefore be 20%, 15% or 7% of the nominal load, respectively.

### List of reference numerals

- 1: asset comprising an engine
- 2: electrical energy storage asset
- 3: energy converter asset
- 4: electrical energy consuming asset
- 5: electrical energy consuming asset
- 6: electrical energy consuming asset
- 7: memory unit
- 8: processing unit
- 9: human-machine-interface
- 10: control means
- 11: grid
- 12: communication interface
- i: first method step
- ii: second method step
- iii: third method step
- iv: fourth method step
- v: fifth method step
- vi: sixth method step
- vii: seventh method step

## Claims

1. Method for controlling at least one asset (1, 2, 3, 4) in a power grid (11), in particular a microgrid, with at least one electrical energy generation asset (1, 2, 3), comprising the steps of:
- defining the block load reserve of an asset (1, 2, 3, 4) as a power value such that, under the condition that the power is solely provided by said asset (1, 2, 3, 4), if the total load of the grid (11) is changed by the amount of said power value, the voltage and/or frequency of the grid (11) essentially remain within predefined boundaries
- defining a minimum block load reserve of the grid (11) as a reference value
- estimating the block load reserve of each asset (1, 2, 3, 4) available in the power grid (11)
- calculating the sum of the total available block load reserve of all available assets (1, 2, 3, 4) combined in the grid (11)
- calculating a block load gap as a difference of the reference value for the minimum block load reserve of the grid (11) and the sum of the available block load reserve
- if the block load gap is non-zero in magnitude, controlling at least one asset (1, 2, 3, 4) by starting and/or adjusting and/or keeping up operation of at least one asset in the grid (11).

2. Method according to the preceding claim, wherein at least one asset (1, 2, 3, 4) is controlled to at least partially compensate the difference of the sum of the available block load reserve and the reference value for the minimum block load reserve.

3. Method according to one of the preceding claims, wherein the minimum block load reserve of the grid (11) is defined with respect to a predefined change of the total load of the grid (11) under the condition that the voltage and/or frequency of the grid (11) essentially remain within predefined boundaries for said predefined change of the total load of the grid (11), wherein preferably the predefined change of the total load of the grid (11) is defined in a human-machine-interface (9) .

4. Method according to one of the preceding claims, wherein the minimum block load reserve of the grid (11) is defined via a communication interface (12) to enable external requests for block loads and/or assets (1, 2, 3, 4) .

5. Method according to one of the preceding claims, wherein the minimum block load reserve of the grid (11) is defined based on an estimated worst-case scenario, in particular failure of at least one asset (1, 2, 3, 4) and/or loss of power output of an energy generating asset (1, 2, 3).

6. Method according to one of the preceding claims, wherein the method is further comprising the step of characterizing available assets (1, 2, 3, 4) with respect to the capability of at least compensating the difference of the sum of the available block load reserve and the reference value for the minimum block load reserve.

7. Method according to the preceding claim, wherein at least one asset (1, 2, 3, 4) is controlled based on the characterization of the available assets (1, 2, 3, 4) in order to at least partially compensate the difference of the total available block load reserve and the reference value.

8. Method according to one of the preceding claims, wherein the method is further comprising the step of selecting a voltage performance level and/or frequency performance level of the grid (11) including boundaries for an allowable deviation from a voltage and/or frequency of the grid (11) from a desired voltage and/or frequency, preferably in a human-machine-interface (9).

9. Method according to the preceding claim, wherein selecting a voltage performance level and/or frequency performance level of the grid (11) includes predefining boundaries for an allowable temporal deviation and/or relative deviation and/or absolute deviation from a desired voltage and/or frequency of the grid (11).

10. Method according to one of the preceding claims, wherein the energy consumption of at least one electrical energy consuming asset (4) is controlled to at least partially compensate the difference of the sum of the available block load reserve and the reference value for the minimum block load reserve.

11. Method according to one of the preceding claims, wherein the block load reserve of each asset (1, 2, 3, 4) available in the grid (11) is estimated based on
- a startup behavior and/or a steady state behavior of an asset (1, 2, 3, 4), and/or
- predefined block load reserve values, preferably calibration values for the block load reserve, stored in a database, wherein preferably the values are selected via a human-machine-interface (9), and/or
- at least one adjustable parameter relating to the block load reserve, which is stored in a database, wherein preferably the at least one parameter relating to the block load reserve is adjustable via a human-machine-interface (9).

12. Method according to one of the preceding claims, wherein the block load reserve of each asset available in the grid (11) in the form of an electrical energy generation asset (1) comprising an engine, in particular a gas engine, is estimated based on an operating point of said engine and/or a load capacity utilization of said engine.

13. Method according to one of the preceding claims, wherein the block load reserve of each asset available in the grid (11) is estimated based on at least one parameter relating to the actual state of charge and/or the actual power output of an asset available in the form of an electrical energy storage asset (2) and/or in the form of an energy converter asset (3).

14. Method according to one of the preceding claims, wherein the total available block load reserve of all available assets (1, 2, 3, 4) combined in the grid (11) is calculated based on the estimation of the block load reserve of each asset (1, 2, 3, 4) available in the grid (11).

15. Computer program product, comprising commands from a memory unit (7) which is in or can be brought into data connection with the processing unit (8) that, when executed by a processing unit (8), cause the latter to perform a method according to one of the preceding claims.

16. Control means (10) for controlling assets (1, 2, 3, 4) in a power grid (11), which is adapted for carrying out a method according to one of the preceding claims for controlling assets (1, 2, 3, 4) in a grid (11) with at least one electrical energy generation asset (1, 2, 3), wherein by the control means
- in a first operating mode, definition of a block load reserve of the grid (11) can be carried out,
- in a second operating mode, definition of the block load reserve of an asset (1, 2, 3, 4) can be carried out,
- in a third operating mode, definition of a minimum block load reserve within the grid (11) as a reference value can be carried out,
- in a fourth operating mode, an estimation of the block load reserve of each asset (1, 2, 3, 4) available in the power grid (11) can be carried out,
- in a fifth operating mode, a calculation of the sum of the total available block load reserve of all available assets (1, 2, 3, 4) combined in the grid (11) can be carried out,
- in a sixth operating mode, a calculation of the difference of the sum of the available block load reserve and the reference value for the minimum block load reserve can be carried out,
- in a seventh operating mode, control of at least one asset by starting and/or adjusting and/or keeping up operation of at least one asset (1, 2, 3, 4) in the grid (11) can be carried out.

17. Power grid (11), in particular a microgrid, with at least one asset (1, 2, 3, 4), in particular at least one electrical energy generation asset (1, 2, 3), having at least one control means (10) according to the preceding claim.
